# EUROPEAN PATENT SPECIFICATION

(11) **EP 2 566 344 B1**
(45) Date of publication and mention of the grant of the patent: **23.03.2016**
(21) Application number: 11718873.0
(22) Date of filing: 02.05.2011
(51) Int. Cl.: A23G 4/08, A23G 4/10, A23L 29/262

(54) **NATURAL CHEWING GUM INCLUDING CELLULOSE MATERIALS**
NATÜRLICHER KAUGUMMI MIT CELLULOSESTOFFEN
GOMME À MÂCHER NATURELLE COMPRENANT DES MATIÈRES CELLULOSIQUES

(30) Priority: 03.05.2010 US 330728 P
(43) Date of publication of application: 13.03.2013
(73) Proprietor: Intercontinental Great Brands LLC, East Hanover, NJ 07936 (US)
(72) Inventor: MCCORMICK, Demetrius, Clinton New Jersey 08809 (US); CARLISE, Joseph, Annandale New Jersey 08801 (US)
(74) Representative: Wilson Gunn
(86) International application number: PCT/US2011/034743
(87) International publication number: WO 2011/139943

(56) References cited:
- WO-A1-01/49124
- US-A- 4 241 090
- US-A- 5 094 858

## Description

### FIELD

The present invention relates to chewing gum compositions including at least one natural component. In particular, the invention relates to a chewing gum base including a natural component, such as cellulose materials derived from natural sources.

### BACKGROUND

Chewing gums available today generally contain a water-insoluble gum base, sweeteners, natural or artificial flavors, and a variety of additional components tailored to provide specific release characteristics. For example, some chewing gums may include plasticizers or softeners to improve consistency during chew. Other chewing gums, for instance, may include physiological cooling agents to provide a cooling sensation upon consumption by the user. Typically, chewing gums incorporate the use of synthetic materials, particularly in the formation of the gum base portion of the chewing gum.

US 5094858 describes chewing gum products incorporating Alitame in a manner to separate the Alitame from gum ingredients which cause the Alitame to degrade. US 4241090 describes a non-adhesive chewing gum which does not adhere to dentures and includes gum base, sweetener, flavor and a slip agent for imparting non-adhesive properties, the slip agent being alpha-cellulose, texturized vegetable protein, bran, fish protein concentrate, citrus peel, citrus pulp, fruit pulp or mixtures thereof.
WO 01/49124 describes a chewing gum having improved release of a lipophilic active agent, the gum base comprising hydrophilic polymers, hydrophilic softeners/emulsifiers and fillers, but being essentially free of hydrophobic elastomers and hydrophobic softeners, as well as waxes and elastomer solvents.

Consumers today are becoming more interested in and desiring of products that are at least partially based on natural components. Natural components are generally regarded as being not only more environmentally friendly, but also are regarded as healthier to the consumer, particularly when the product is a food-type of product. Unfortunately, many natural components are too costly to acquire, and further many of them have the effect of detrimentally changing the look, taste or feel of chewing gum products. There is thus a need for the development of natural components in a chewing gum product, particularly in the gum base portion of the chewing gum.

The present invention seeks to provide a cost-effective chewing gum that incorporates at least one natural component, either as a replacement for or supplement to synthetic components typically used in chewing gums, while still maintaining a pleasing look, taste and feel of a synthetic chewing gum product.

### SUMMARY

In some embodiments of the invention, there is provided a chewing gum base including: (a) an elastomer; (b) a natural softener chosen from plant sterols, plant sterol esters, lanolin, cholesterol NF, damar resin, copal resin, sandarac resin, mastic resin, mastic powder, ursolic acid, lycopene and squalene and (c) a filler including at least one natural component wherein said natural component comprises at least one cellulose fiber.

In other embodiments of the present invention, there may be provided a method of making a chewing gum base, comprising the steps of (a) providing an elastomer; (b) providing natural softener chosen from plant sterols, plant sterol esters, lanolin, cholesterol NF, damar resin, copal resin, sandarac resin, mastic resin, mastic powder, ursolic acid, lycopene and squalene; (c) providing a filler comprising at least one natural component wherein said natural component comprises at least one cellulose fiber; and (d) mixing said elastomer, natural softener, and filler to provide a chewing gum base.

### BRIEF DESCRIPTION OF THE FIGURES

Figure 1 is a graphical depiction of the results of an experiment demonstrating the gum base density vs. filler while soaking in water.
Figure 2 is a graphical depiction of the results of an experiment demonstrating the gum base density of various embodiments of the present invention.
Figure 3 is a graphical depiction of the results of an experiment demonstrating the cooling over time of various embodiments of the present invention. Figure 4 is a graphical depiction of the results of an experiment demonstrating the cooling over time of various embodiments of the present invention.
Figure 5 is a graphical depiction of the results of an experiment demonstrating the texture over time of various embodiments of the present invention. Figure 6 is a graphical depiction of the results of an experiment demonstrating the sweetness over time of various embodiments of the present invention.
Figure 7 is a graphical depiction of the results of an experiment demonstrating the flavor over time of various embodiments of the present invention. Figure 8 is a graphical depiction of the results of an experiment demonstrating the bolus size over time of various embodiments of the present invention.
Figure 9 is a graphical depiction of the results of an experiment demonstrating the densities of various inventive gums after various conditions.

### DETAILED DESCRIPTION

The present invention relates to chewing gum compositions that provide the advantage of including at least one natural component as a replacement for or as a supplement to typically used synthetic materials. The present invention provides a chewing gum product that has a pleasing look, taste and feel to consumers. The present invention additionally provides a chewing gum product that is cost-effective. As has been surprisingly discovered by the present inventors, the use of particular natural components in a chewing gum actually provides a product that has a lower density. As may be appreciated by one of ordinary skill in the art, consumer products, particularly chewing gums, which have a lower density, allow the manufacturer to prepare and distribute the same size product with less material. This provides cost savings to the manufacturer and distributor, while having no negative impact on the consumer who will receive the same size piece of chewing gum.

It may be desirable to incorporate a sufficient amount of natural components so that the distributor may properly mark its product as "made from natural ingredients", "natural", or "all- natural". Such marking may be governed by one or more governmental regulatory agencies, which require a certain percentage of natural components to be considered "made from natural ingredients", "natural", or "all-natural". Thus, in one embodiment, the present invention relates to a product that complies with federally regulated marking standards concerning being a "natural" product, or having other similar markings. As used herein, the terms "natural" and "natural component" refers to a product that is not made from synthetic components. In some embodiments, the terms "natural" and "natural component" may refer to a component that is free of certain materials, for example, the component may be free of petrochemicals.

As used herein, the terms "traditional", "traditional chewing gum base" and "traditional chewing gum base made from non-natural components" refer generally to chewing gum bases that do not include natural components. The terms "inventive chewing gum base" and "natural chewing gum base" refer generally to chewing gum bases which include at least one natural component, either as a replacement for or in combination with a non-natural component.

The present invention compares inventive chewing gum bases with traditional chewing gum bases. When used as a comparison to an inventive chewing gum base, the terms "traditional" and "traditional chewing gum base" refer to a chewing gum base that includes the same components as the comparative inventive chewing gum base, with the exception that the inventive chewing gum base includes at least one natural component. For example, when an inventive chewing gum base including a natural filler is compared to a traditional chewing gum base made from a non-natural filler, the "inventive chewing gum base" and "traditional chewing gum base" are understood to include the same components except for the filler. In this example, the inventive chewing gum base includes a natural filler, and the traditional chewing gum base does not include a natural filler.

As used herein the transitional term "comprising," (also comprises," etc.) which is synonymous with ""including," ""containing," or ""characterized by," is inclusive or open-ended and does not exclude additional, unrecited elements or method steps, regardless of its use in the preamble or the body of a claim.

As used herein, the terms "bubble gum" and "chewing gum" are used interchangeably and are both meant to include any gum compositions.

Embodiments described herein provide a chewing gum composition that may include a gum base having at least one natural component. In some embodiments, the natural component may be a filler, and may include at least one cellulose fiber.

### Chewing Gum Bases

The chewing gum composition includes a gum base, from which the chewing gum is prepared. The gum base may include any component known in the chewing gum art. Such components may be water soluble, water-insoluble or a combination thereof. Typically, a gum base may include elastomers, bulking agents, waxes, elastomer solvents, emulsifiers, plasticizers, fillers and mixtures thereof. Traditionally, each of these gum base components are made from synthetic materials. The present invention provides a gum base that includes natural components. The natural component may be incorporated as a replacement for a synthetic component. Alternatively, the natural component maybe incorporated as a supplement to a synthetic component. For example, the gum base may include a natural plasticizer and natural filler, while including synthetic elastomers, bulking agents, and other components.

The elastomers (also referred to as rubbers) employed in the gum base will vary greatly depending upon various factors such as the type of gum base desired, the consistency of gum composition desired and the other components used in the composition to make the final chewing gum product. The elastomer may be any water-insoluble polymer known in the art, and includes those gum polymers utilized for chewing gums and bubble gums. Illustrative examples of suitable polymers in gum bases include both natural and synthetic elastomers. For example, those polymers which are suitable in gum base compositions include, without limitation, natural substances (of vegetable origin) such as chicle, natural rubber, crown gum, nispero, rosidinha, jelutong, perillo, niger gutta, tunu, balata, guttapercha, lechi capsi, sorva, gutta kay, and the like, and mixtures thereof. Examples of synthetic elastomers include, without limitation, styrene- butadiene copolymers (SBR), polyisobutylene, isobutylene-isoprene copolymers, polyethylene, polyvinyl acetate and the like, and mixtures thereof may.

The gum base include at least one natural component as an elastomer. Such natural elastomer components may include, for example, natural rubber latex including that sold under the trade name Vytex NRL. A natural elastomer may include guayule solid rubber, sold by Yulex Corporation under the trade name Guayule. The natural rubber latex product derived from the guayule shrub is a hypoallergenic product having a high molecular weight and low protein content.

The amount of elastomer employed in the gum base may vary depending upon various factors such as the type of gum base used, the consistency of the gum composition desired and the other components used in the composition to make the final chewing gum product. In general, the elastomer will be present in the gum base in an amount from about 10% to about 60% by weight, desirably from about 35% to about 40% by weight.

In some embodiments, the gum base may include wax. Wax may be used to soften the elastomer, and may be used to improve the elasticity of the gum base. Natural waxes are preferred, and include beeswax, palm wax, and rice bran wax. When present, the waxes employed may have a melting point below about 60°C, and preferably between about 45°C and about 55°C. One useful low melting point wax may be a paraffin wax. The low melting point wax may be present in the gum base in an amount from about 6% to about 1o%, and preferably from about 7% to about 9.5%, by weight of the gum base.

In addition to the low melting point waxes, waxes having a higher melting point may be used in the gum base in amounts up to about 5% by weight of the gum base. Such high melting waxes include vegetable waxes, candelilla wax, carnuba wax, most petroleum waxes, and the like, and mixtures thereof.

In addition to the components set out above, the gum base may include a variety of other components, such as components selected from elastomer solvents, softeners, emulsifiers, plasticizers, fillers, and mixtures thereof.

The gum base may contain elastomer solvents to aid in softening the elastomer component. Such elastomer solvents may include those elastomer solvents known in the art, for example, terpinene resins such as polymers of alpha-pinene or beta-pinene, methyl, glycerol and pentaerythritol esters of rosins and modified rosins and gums such as hydrogenated, dimerized and polymerized rosins, and mixtures thereof. Examples of elastomer solvents suitable for use herein may include the pentaerythritol ester of partially hydrogenated wood and gum rosin, the pentaerythritol ester of wood and gum rosin, the glycerol ester of wood rosin, the glycerol ester of partially dimerized wood and gum rosin, the glycerol ester of polymerized wood and gum rosin, the glycerol ester of tall oil rosin, the glycerol ester of wood and gum rosin and the partially hydrogenated wood and gum rosin and the partially hydrogenated methyl ester of wood and rosin, and the like, and mixtures thereof. The elastomer solvent may be employed in the gum base in amounts from about 2% to about 15%, and preferably from about 7% to about 11%, by weight of the gum base.

The gum base may also include emulsifiers, which aid in dispersing the immiscible components into a single stable system. The emulsifiers useful in this invention include glyceryl monostearate, lecithin, fatty acid monoglycerides, diglycerides, propylene glycol monostearate, and the like, and mixtures thereof The emulsifier may be employed in amounts from about 2% to about 15%, and more specifically, from about 7% to about II%, by weight of the gum base.

The gum base may also include plasticizers or softeners to provide a variety of desirable textures and consistency properties. Because of the low molecular weight of these ingredients, the plasticizers and softeners are able to penetrate the fundamental structure of the gum base making it plastic and less viscous. Useful plasticizers and softeners include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and the like, and mixtures thereof. Waxes, for example, natural and synthetic waxes, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. In some embodiments, hydrogenated vegetable oils may be used as a plasticizer or a softener, and may be incorporated into the gum base. The plasticizers and softeners are generally employed in the gum base in amounts up to about 20% by weight of the gum base, and more specifically in amounts from about 9% to about 17%, by weight of the gum base.

Plasticizers also include hydrogenated vegetable oils, such as soybean oil and cottonseed oils, which may be employed alone or in combination. These plasticizers provide the gum base with good texture and soft chew characteristics. These plasticizers and softeners are generally employed in amounts from about 5% to about 14%, and more specifically in amounts from about 5% to about 13.5%, by weight of the gum base.

The gum base includes one or more natural softeners, which may be used in addition to or as a replacement for the softeners described above. Such natural softeners are chosen from spray dried and non-spray dried plant sterols and plant sterol esters, including those sold under the trade name Vegapure by Cognis (such as, for example, Vegapure F 40 and Vegapure F 90), phytosterols, spray dried phytosterol esters, lanolin (including that sold by Fancor), cholesterol NF, damar resin (sold as Damar ABC), copal resin (sold as Copal PWS or Copal Scraped), sandarac resin, mastic resin, mastic powder, ursolic acid (sold as Ursole), and lycopene. Other natural softeners that may be used in the chewing gum base are squalene. Such natural softeners may be incorporated in the gum base in any desired amount, include those amounts set forth above for other softeners.

In some embodiments, the gum base may also include effective amounts of bulking agents such as mineral adjuvants, which may serve as fillers and textural agents. Useful mineral adjuvants include calcium carbonate, magnesium carbonate, alumina, aluminum hydroxide, aluminum silicate, talc, tricalcium phosphate, dicalcium phosphate, calcium sulfate and the like, and mixtures thereof. These fillers or adjuvants may be used in the gum base compositions in various amounts. Preferably the amount of filler, when used, will be present in an amount from about 15% to about 40%, and desirably from about 20% to about 30%, by weight of the gum base.

The gum base includes a filler which includes at least one natural component comprising at least one cellulose fibre. Such natural fillers are used in addition to or as a complete replacement for other fillers set forth above. In some embodiments, for example, the filler used in the chewing gum base may include a mixture of talc and at least one natural filler comprising at least one cellulose fibre. Preferably, the total amount of filler used in the gum base is between about 15% and about 40% of the gum base, and most preferably between about 20% and about 30% of the gum base.

The natural fillers comprise at least one cellulose fiber, and may also comprise wood lignin. Natural fillers may include a combination of cellulose and psillium, such as that sold under the trade name CreaSplend (sold by CreaFill Fibers Corporation). For example, it may be desirable to use a filler that is about 90% cellulose fiber and about 10% psillium.

Desirably, the natural filler includes a cellulose fiber derived from a natural source, such as bamboo and other wood. Particularly useful fillers include cellulose fibers sold under the trade name CreaFibe, sold by CreaFill Fibers Corporation. Such useful cellulose fibers include, but are not limited to, Creafibe QC40, Creafibe QC90, Creafibe QC150, Creafibe QC200, Creafibe QC750, Creafibe SC 40, Creafibe SC90, Creafibe SC900, and Creafibe TC750, all sold by CreaFill Fibers Corporation. Generally, useful cellulose fibers have a moisture content of about 7%, and desirably less than 7%, and a pH value of about 5 to about 7.5.

Cellulose fibers useful in the present invention may be any desired grade and particle size desired. For example, useful cellulose fiber may be a lower grade, having a loose density metric of greater than 200 g/l, an average fiber length of about 30 microns, and a particle size of up to 50 microns. A second grade of useful cellulose fibers may have a loose density metric of greater than 170 g/l, an average fiber length of about 60 microns, and a particle size of up to 90 microns. A third grade of useful cellulose fibers may have a loose density metric of greater than 160 g/l, an average fiber length of about 115 microns, and a particle size of up to 160 microns. Yet another grade of useful cellulose fibers may have a loose density metric of greater than 130 g/l, an average fiber length of about 120 microns, and a particle size of up to 160 microns. Another grade of useful cellulose fibers may have a loose density metric of greater than 55 g/l, an average fiber length of about 145 microns, and a particle size of up to 200 microns. A sixth grade of useful cellulose fibers may have a loose density metric of greater than 30 g/l, an average fiber length of about 550 microns, and a particle size of up to 800 microns.

It will be understood, of course, that varying grades of cellulose fibers may be used in combination as a filler in the present invention. For example, the cellulose fibers useful in the present invention may have a loose density metric of from about 30 g/l to about 200 g/l. The cellulose fibers useful in the present invention may further have an average fiber length of from about 30 microns to about 550 microns. Finally, useful cellulose fibers may have an average particle size distribution of greater than 32 microns, greater than 50 microns, greater than 90 microns, greater than 106 microns, greater than 160 microns, greater than 200 microns, greater than 300 microns, or greater than 800 microns. The particle size and distribution may be selected so as to provide an appropriate and beneficial mouth feel while providing a natural chewing gum base.

It may be desirable to provide a chewing gum base that includes at least one natural component as a filler, which provides a gum base having a density that is lower than traditional chewing gum bases including non-natural components. As used herein, the term "traditional fillers" or "traditional chewing gum base made from traditional fillers" refer to non-natural fillers such as talc or carbonate and chewing gum bases made from non-natural fillers such as talc or carbonate, respectively. It will be understood, of course, that the density of a chewing gum base may vary depending upon the particular components used to form the gum base. In some embodiments, a traditional chewing gum base made from traditional fillers may have a density of about 1.25 g/cc while an inventive chewing gum base made from the same materials (but with a natural filler component) may have a density of about 1.01-1.02 g/cc. In other embodiments, a traditional chewing gum base made from traditional fillers may have a density of about 1 .O1 glcc, where the inventive chewing gum base made from the same materials (but with a natural filler component) may have a density of about 0.92-0.94 g/cc.

Thus, inventive chewing gum bases, which include at least one natural filler component, such as cellulose fibers, may have a density that is about 80% of traditional chewing gum bases made from traditional fillers, or may have a density that is about 90% of traditional chewing gum bases made from traditional fillers. Desirably, the inventive chewing gum base has a density that is about 75% to about 95% of the density of a traditional chewing gum base made from traditional fillers.

In some embodiments, inventive chewing gum bases may have a higher level of water uptake than traditional chewing gum bases made from traditional fillers. It may be desirable to provide a chewing gum base that picks up at least twice as much water as a traditional chewing gum base made from traditional fillers over a period of about 14 days. In some embodiments, the inventive chewing gum base may pick up at least three times as much water as a traditional chewing gum base made from traditional fillers over a period of about 14 days.

A variety of additional components may be optionally included in the gum base in effective amounts such as flavor agents and coloring agents, antioxidants, preservatives, and the like. For example, titanium dioxide and other dyes suitable for food, drug and cosmetic applications, known as F. D. & C. dyes, may be utilized. An anti-oxidant such as butylated hydroxytoluene (BHT), butylated hydroxyanisole (BHA), propyl gallate, vitamin E and mixtures thereof, may also be included. Other conventional chewing gum additives known to one having ordinary skill in the chewing gum art may also be used in the gum base.

### Chewing Gum Compositions

The present invention further relates to a chewing gum composition incorporating a chewing gum base, such as those chewing gum bases described above. The chewing gum compositions may include amounts of conventional additives selected from the group consisting of sweetening agents, plasticizers, softeners, emulsifiers, waxes, fillers, bulking agents (carriers, extenders, bulk sweeteners), mineral adjuvants, flavor agents and coloring agents, antioxidants, acidulants, thickeners, medicaments, oral care actives, such as remineralization agents, antimicrobials and tooth whitening agents, as described in U.S. Patent No. 7,641,892, and the like, and mixtures thereof. Some of these additives may serve more than one purpose. For example, in sugarless gum compositions, a sweetener, such as maltitol or other sugar alcohol, may also function as a bulking agent.

Bulk sweeteners include sugars, sugarless bulk sweeteners, or the like, or mixtures thereof. Bulk sweeteners generally are present in amounts of about 5% to about 99% by weight of the chewing gum composition.

Suitable sugar sweeteners generally include mono-saccharides, di-saccharides and poly- saccharides such as but not limited to, sucrose (sugar), dextrose, maltose, dextrin, xylose, ribose, glucose, lactose, mannose, galactose, fructose (levulose), invert sugar, fructo oligo saccharide syrups, partially hydrolyzed starch, corn syrup solids, isomaltulose and mixtures thereof.

Suitable sugarless bulk sweeteners include sugar alcohols (or polyols) such as, but not limited to, sorbitol, xylitol, mannitol, galactitol, maltitol, hydrogenated isomaltulose (ISOMALT), lactitol, erythritol, hydrogenated starch hydrolysate, stevia and mixtures thereof.

Suitable hydrogenated starch hydrolysates include those disclosed in U.S. Pat. No. 4,279,931 and various hydrogenated glucose syrups and/or powders which contain sorbitol, maltitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as LYCASIN®, a commercially available product manufactured by Roquette Freres of France, and HYSTAR®, a commercially available product manufactured by SPI Polyols, Inc. of New Castle, Delaware, are also useful.

In some embodiments, high-intensity sweeteners may be used. Without being limited to particular sweeteners, representative categories and examples include:
(a) water-soluble sweetening agents such as dihydrochalcones, monellin, stevia, steviosides, rebaudioside A, glycyrrhizin, dihydroflavenol, and sugar alcohols such as sorbitol, mannitol, maltitol, xylitol, erythritol and L-aminodicarboxylic acid aminoalkenoic acid ester amides, such as those disclosed in U.S. Pat. No. 4,619,834, and mixtures thereof;
(b) water-soluble artificial sweeteners such as soluble saccharin salts, i.e., sodium or calcium saccharin salts, cyclamate salts, the sodium, ammonium or calcium salt of 3,4-dihydro- 6-methyl-1,2,3-oxathiazine-4-one-2,2-dioxide, the potassium salt of 3,4-dihydro-6-menthyl-1,2,3- oxathiazine-4-one-,2-dioxide (Acesulfame-K), the free acid form of saccharin, and mixtures thereof;
(c) dipeptide based sweeteners, such as L-aspartic acid derived sweeteners, such as L- aspartyl-L-phenylalanine methyl ester (Aspartame) and materials described in U.S. Pat. No. 3,492,13 1, L-alphaaspartyl-N-(2,2,4,4-tetramethyl-3-thietanyl)-D-alaninamide hydrate (Alitame), N-∼-(3,3-dimethylbutyl)-L-aspartyl]-L-phenylalaninelmethyl ester (Neotame), methyl esters of L-aspartyl-L-phenylglycerine and L-aspartyl-L-2,5-dihydrophenyl-glycine,L-aspartyl-2,5-dihydro-L-phenylalanine;L-aspartyl-L-(I-cyclohexen)-alanine,and mixtures thereof;
(d) water-soluble sweeteners derived from naturally occurring water-soluble sweeteners, such as chlorinated derivatives of ordinary sugar (sucrose), e.g., chlorodeoxysugar derivatives such as derivatives of chlorodeoxysucrose or chlorodeoxygalactosucrose, known, for example, under the product designation of Sucralose; examples of chlorodeoxysucrose and chlorodeoxygalactosucrosederivatives include but are not limited to: 1-chloro-1'-deoxysucrose; 4-chloro-4-deoxy-alpha-D-galactopyranosyl-alpha-D-fi-uctofuranosidey or 4-chloro-4- deoxygalactosucrose; 4-chloro-4-deoxy-alpha-D-galactopyranosyl-1 -chloro-I-deoxy-beta-D- fi-ucto-f uranoside, or 4,1'-dichloro-4, 1'-dideoxygalactosucrose; 1',6'-dichloro 1',6'-dideoxysucrose; 4-chloro-4-deoxy-alpha-D-galactopyranosyl-1,6-dichloro-1,6-dideoxy-beta-D-fructofuranoside, or 4,1',6'-trichloro-4,1',6'-trideoxygalactosucrose; 4,6-dichloro-4,6-dideoxy-alpha-D-galactopyranosyl-6-chloro-6-deoxy-beta-D-fructofuranoside, or 4,6,6'-trichloro-4,6,6'-trideoxygalactosucrose; 6,11,6'-trichloro-6, 1',6'-trideoxysucrose; 4,6-dichloro-4,6-dideoxy-alpha-D-galacto-pyranosyl- 1,6-dichloro-1,6-dideoxy-beta-D-fructofuranoside,or 4,6,1',6'-tetrachloro4,6,1',6'-tetradeoxygalacto-sucrose;and 4,6,1',6'-tetradeoxy-sucrose,and mixtures thereof;
(e) protein based sweeteners such as thaumatococcus danielli (Thaumatin I and 11) and talin;
(f) the sweetener monatin (2-hydroxy-2-(indol-3-ylmethyl)-4-aminoglutaricacid) and its derivatives; and
(g) the sweetener Lo han guo (sometimes also referred to as "Lo han kuo").

The intense sweetening agents may be used in many distinct physical forms well-known in the art to provide an initial burst of sweetness andlor a prolonged sensation of sweetness. Without being limited thereto, such physical forms include free forms, such as spray dried, powdered, beaded forms, encapsulated forms, and mixtures thereof.

In general, an effective amount of intense sweetener may be utilized to provide the level of sweetness desired, and this amount may vary with the sweetener selected. The intense sweetener may be present in amounts from about 0.001 % to about 3%, by weight of the chewing gum composition, depending upon the sweetener or combination of sweeteners used. The exact range of amounts for each type of sweetener may be selected by those skilled in the art.

Flavors (flavorings or flavor agents), which may be used in the chewing gum compositions, include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, Japanese mint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic hit flavors such as vanilla, and citrus oils including lemon, orange, lime, grapefruit, yam, sudachi, and hit essences including apple, pear, peach, grape, blueberry, strawberry, raspberry, cherry, plum, pineapple, watermelon, apricot, banana, melon, apricot, ume, cherry, raspberry, blackberry, tropical fruit, mango, mangosteen, pomegranate, papaya and so forth. Other potential flavors include a milk flavor, a butter flavor, a cheese flavor, a cream flavor, and a yogurt flavor; a vanilla flavor; tea or coffee flavors, such as a green tea flavor, a oolong tea flavor, a tea flavor, a cocoa flavor, a chocolate flavor, and a coffee flavor; mint flavors, such as a peppermint flavor, a spearmint flavor, and a Japanese mint flavor; spicy flavors, such as an asafetida flavor, an ajowan flavor, an anise flavor, an angelica flavor, a fennel flavor, an allspice flavor, a cinnamon flavor, a camomile flavor, a mustard flavor, a cardamom flavor, a caraway flavor, a cumin flavor, a clove flavor, a pepper flavor, a coriander flavor, a sassafras flavor, a savory flavor, a Zanthoxyli Fructus flavor, a perilla flavor, a juniper berry flavor, a ginger flavor, a star anise flavor, a horseradish flavor, a thyme flavor, a tarragon flavor, a dill flavor, a capsicum flavor, a nutmeg flavor, a basil flavor, a marjoram flavor, a rosemary flavor, a bayleaf flavor, and a wasabi (Japanese horseradish) flavor; alcoholic flavors, such as a wine flavor, a whisky flavor, a brandy flavor, a rum flavor, a gin flavor, and a liqueur flavor; floral flavors; and vegetable flavors, such as an onion flavor, a garlic flavor, a cabbage flavor, a carrot flavor, a celery flavor, mushroom flavor, and a tomato flavor. These flavoring agents may be used in liquid or solid form and may be used individually or in admixture. Commonly used flavors include mints such as peppermint, menthol, spearmint, artificial vanilla, cinnamon derivatives, and various fruit flavors, whether employed individually or in admixture. Flavors may also provide breath freshening properties, particularly the mint flavors when used in combination with cooling agents.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy hity flavors), butyraldehyde (butter, cheese), valeraldehyde (butter, cheese), citronellal (modifies, many types), decanal (citrus fruits), aldehyde C-8 (citrus hits), aldehyde C-9 (citrus fruits), aldehyde C-12 (citrus fmits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6- dimethyloctanal (green hit), and 2-dodecenal (citrus, mandarin), cherry, grape, strawberry shortcake, and mixtures thereof.

In some embodiments, the flavor agent may be employed in either liquid form andlor dried form. When employed in the latter form, suitable drying means such as spray drying the oil may be used. Alternatively, the flavor agent may be absorbed onto water soluble materials, such as cellulose, starch, sugar, maltodextrin, gum arabic and so forth or may be encapsulated. The actual techniques for preparing such dried forms are well-known.

In some embodiments, the flavor agents may be used in many distinct physical forms well-known in the art to provide an initial burst of flavor andlor a prolonged sensation of flavor. Without being limited thereto, such physical forms include free forms, such as spray dried, powdered, beaded forms, encapsulated forms, and mixtures thereof.

In chewing gum compositions, flavor agents generally may be present in amounts from about 0.02% to about 5%, and more specifically from about 0.1 % to about 4%, and even more specifically, from about 0.8% to about 3%, by weight of the composition.

Coloring agents may be used in amounts effective to produce the desired color. The coloring agents may include pigments which may be incorporated in amounts up to about 6%, by weight of the composition. For example, titanium dioxide may be incorporated in amounts up to about 2%, and preferably less than about 1%, by weight of the composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No. 1 comprises a triphenylmethane dye and is the monosodium salt of 4-14-(N-ethyl-p-sulfoniumbenzylamino)diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884.

In some embodiments, the chewing gum compositions may include physiological cooling agents. A variety of well known cooling agents may be employed. For example, among the useful cooling agents are included xylitol, erythritol, dextrose, sorbitol, menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropylbutanamide (WS-23), N-ethyl-p-menthane-3-carboxamide (WS-3), isopulegol, 3-(I-menthoxy)propane- 1,2-diol, 3-(I-menthoxy)-2-methylpropane-1,2-diol, p- menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2- isopropyl-5-methylcyclohexanecarboxamide,Japanese mint oil, peppermint oil, 3-(1- menthoxy)ethan- 1-ol, 3 -(I-menthoxy)propan- 1-ol, 3-(1-menthoxy)butan- 1 -01, I-menthylacetic acid N-ethylamide, 1-menthyl-4-hydroxypentanoate, I-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLATO type MGA); 3-1-menthoxypropane-1,2-diol (from Takasago, FEMA 3784); and menthyl lactate; (from Haarman & Reimer, FEMA 3748, tradename FRESCOLATO type ML), WS-30, WS-14, Eucalyptus extract (p-Mehtha-3,8- Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2. I), Heptane-2-carboxamide; and Menthol methyl ether, and menthyl pyrrolidone carboxylate among others. These and other suitable cooling agents are further described in the following U.S. patents: U.S. 4,230,688; 4,032,661; 4,459,425; 4,136,163; 5,266,592; 6,627,233.

Some embodiments may include warming agents, which may be selected from a wide variety of compounds known to provide the sensory signal of warming to the individual user. These compounds offer the perceived sensation of warmth, particularly in the oral cavity, and often enhance the perception of flavors, sweeteners and other organoleptic components. Useful warming agents include those having at least one allyl vinyl component, which may bind to oral receptors. Examples of suitable warming agents include, but are not limited to: vanillyl alcohol n-butylether (TK-1000, supplied by Takasago Perfumery Company Ltd" Tokyo, Japan); vanillyl alcohol n-propylether; vanillyl alcohol isopropylether; vanillyl alcohol isobutylether; vanillyl alcohol n-aminoether; vanillyl alcohol isoamylether; vanillyl alcohol n-hexylether; vanillyl alcohol methylether; vanillyl alcohol ethylether; gingerol; shogaol; paradol; zingerone; capsaicin; dihydrocapsaicin; nordihydrocapsaicin; homocapsaicin; homodihydrocapsaicin; ethanol; isopropyl alcohol; iso-amylalcohol; benzyl alcohol; glycerine; chloroform; eugenol; cinnamon oil; cinnamic aldehyde; phosphate derivatives thereof; and combinations thereof.

Tingling agents may be employed to provide a tingling, stinging or numbing sensation to the user. Tingling agents include, but are not limited to: Jambu Oleoresin or para cress (Spilanthes sp.), in which the active ingredient is Spilanthol; Japanese pepper extract (Zanthoxylum peperitum), including the ingredients lcnown as Saanshool-I, Saanshool-I1 and Sanshoamide; black pepper extract (piper nigrum), including the active ingredients chavicine and piperine; Echinacea extract; Northern Prickly Ash extract; and red pepper oleoresin. In some embodiments, alkylamides extracted from materials such as jambu or sanshool may be included. Additionally, in some embodiments, a sensation is created due to effervescence. Such effervescence is created by combining an allcaline material with an acidic material, either or both of which may be encapsulated. In some embodiments, an alkaline material may include alkali metal carbonates, alkali metal bicarbonates, allcaline earth metal carbonates, alkaline earth metal bicarbonates and mixtures thereof. In some embodiments, an acidic material may include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates can be found in U.S. Patent No. 6,780,443. Tingling agents are described in U.S. Patent No. 6,780,443 to Nakatsu et al., U.S. Patent No. 5,407,665 to McLaughlin et al., U.S. Patent No. 6,159,509 to Johnson et al. and U.S. Patent No. 5,545,424 to Nakatsu et al.

Oral care agents that may be used include those actives known to the skilled artisan, such as, but not limited to, surfactants, breath freshening agents, anti-microbial agents, antibacterial agents, anti-calculus agents, anti-plaque agents, oral malodor control agents, fluoride compounds, quaternary ammonium compounds, remineralization agents and combinations thereof.

The plasticizers, softening agents, mineral adjuvants, waxes and antioxidants discussed above, including those natural components described above as being suitable for use in the gum base, may also be used in the chewing gum composition. Examples of other conventional additives which may be used include emulsifiers, such as lecithin and glyceryl monostearate, thickeners, used alone or in combination with other softeners, such as methyl cellulose, alginates, carrageenan, xanthan gum, gelatin, carob, tragacanth, locust bean, and carboxy methyl cellulose, acidulants such as malic acid, adipic acid, citric acid, tartaric acid, fumaric acid, and mixtures thereof, and fillers, such as those discussed above under the category of mineral adjuvants.

Anhydrous glycerin may also be employed as a softening agent in a chewing gum composition, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

Other conventional gum additives known to one having ordinary skill in the chewing gum art also may be used in the chewing gum compositions.

Some embodiments extend to methods of preparing a chewing gum product. The products may be prepared using standard techniques and equipment known to those slcilled in the art, which processes generally involve melting the gum base, incorporating the desired ingredients while mixing and forming the batch into individual chewing gum pieces. The apparatus useful in accordance with the embodiments described herein includes mixing and heating apparatus well known in the chewing gum manufacturing arts, and therefore the selection of the specific apparatus will be apparent to the artisan. For general chewing gum preparation processes see U.S. Patent Nos. 4,271,197 to Hopkins et al, 4,352,822 to Cherukuri et al and 4,497,832 to Cherukuri et al.

Individual chewing gum pieces may be formed using standard techniques known in the chewing gum art. For instance, chewing gum pieces may be prepared in the form of a slab, pellet, stick, center-fill gum, deposited, compressed chewing gum or any other suitable format.

For instance, center-fill chewing gum embodiments may include a center-fill region, which may be a liquid or powder or other solid, and a gum region. Some embodiments also may include an outer gum coating or shell, which typically provides a crunchiness to the piece when initially chewed. The outer coating or shell may at least partially surround the gum region. Center-fill chewing gums and methods of preparing same are more fully described in assignee's U.S. Patent No. 7,641,926, issued on January 5, 2010, and assignee's co-pending U.S. Patent Application No. 1 11210,954, filed on August 24,2005, both entitled "Liquid-Filled Chewing Gum Composition."

Some other chewing gum embodiments may be in a compressed gum format, such as, for example, a pressed tablet gum. Such embodiments may include a particulate chewing gum base, which may include a compressible gum base composition and a tableting powder. Compressed chewing gums are more fully described in assignee's co-pending U.S. Provisional Application No. 601734,680, filed on November 8, 2005, and entitled "Compressible Gum System".

In some embodiments, the chewing gum may have a coating thereon. Such coated chewing gums are typically referred to as pellet gums. The outer coating may be hard or crunchy. Any suitable coating materials known to those skilled in the art may be employed. Typically, the outer coating may include sorbitol, maltitol, xylitol, isomalt, erythritol and other crystallizable polyols; sucrose may also be used. Furthermore the coating may include several opaque layers, such that the chewing gum composition is not visible through the coating itself, which can optionally be covered with a further one or more transparent layers for aesthetic, textural and protective purposes. The outer coating may also contain small amounts of water and gum arabic. The coating can be further coated with wax. The coating may be applied in a conventional manner by successive applications of a coating solution, with drying in between each coat. As the coating dries it usually becomes opaque and is usually white, though other colorants may be added. A polyol coating can be further coated with wax. The coating can further include colored flakes or speckles. If the composition includes a coating, it is possible that one or more oral care actives can be dispersed throughout the coating. This is especially preferred if one or more oral care actives is incompatible in a single phase composition with another of the actives. Flavors may also be added to yield unique product characteristics.

Other materials may be added to the coating to achieve desired properties. These materials may include without limitations, cellulosics such as carboxymethyl cellulose, gelatin, xanthan gum and gum arabic.

The coating composition may be applied by any method known in the art including the method described above. The coating composition may be present in an amount from about 2% to about *60%*, more specifically from about 25% to about 45% by weight of the total chewing gum piece.

The chewing gum bases and chewing gum compositions described herein may be formed through any desired means. In one embodiment, a chewing gum base may be made in a two part mixing process. In this embodiment, the natural filler or fillers (including, for example, cellulose fibers) may be mixed together, separate and apart from other chewing gum base components. Separately, chewing gum base components (including, for example, elastomers) may be combined together, forming a chewing gum base without fillers. Then, the natural fillers and the chewing gum base without fillers may be combined and mixed, for example, in a heated kettle. In another embodiment, the chewing gum base components, including natural fillers and other components, may be combined in one batch, and mixed, for example, in a heated kettle. A chewing gum base including at least one natural component may be combined with other traditional chewing gum components (including, for example, flavors, sweeteners, colors, and other components described above) in a kettle.

Flavors maybe added to the chewing gum base and/or composition in any desired method. In one embodiment, it may be desired to add flavor(s) to the natural filler(s) prior to combining the natural filler(s) to the chewing gum base. For example, in the process of forming the chewing gum base, the natural filler(s) may be separately combined with at least one flavor, to provide a flavored filler. The flavored filler may then be combined with the remaining chewing gum base components to provide a flavored chewing gum base. In this embodiment, the flavor may be "locked in" to the filler(s), and therefore may provide an extended flavor release to the resultant chewing gum composition. In one embodiment, a chewing gum composition made with a flavored filler (as described above) may have an extended flavor release of about 10 to about 15 minutes after chewing. In some embodiments, the flavor release may be extended to longer than 15 minutes after chewing.

In some embodiments, chewing gums including the inventive natural fillers may provide an increased fat tolerance. The natural fillers, such as cellulose fibers, incorporated into the chewing gum base may provide a chewing gum composition that has an increased fat tolerance as compared to traditional gum bases (including fillers such as talc and carbonate). Such inventive chewing gums maybe combined with fat-containing components, for example, chocolates or other fat-containing confectioneries or components. Thus, in this embodiment, the invention may provide a chewing gum composition, which includes at least one natural filler component, and which further contains a fat-containing component, such as chocolate.

The features and advantages of the present invention are more fully shown by the following examples, which are provided for purposes of illustration, and are not to be construed as limiting the invention in any way.

### Examples

### Example 1: Chewing Gum Base including cellulose fibers

Various chewing gum bases were created including different grades of cellulose fibers (natural fillers) and compared to chewing gum bases including either atomite or talc (traditional, non-natural fillers). The chewing gum bases were prepared by mixing the components in a brabender mixer at approximately 50-70 rpm at a temperature of 90°C for about 5-1 0 minutes. The chewing gum bases were prepared as depicted in Table 1 below.

**Table 1: Chewing Gum Base Compositions**

| | A (control) | B (control) | C (*) | D (*) | E (*) |
|---|---|---|---|---|---|
| Butyl rubber | 25% | 25% | 25% | 25% | 25% |
| Glycerol ester Of Pine Rosin | 55% | 55% | 55% | 55% | 55% |
| Talc | 25% | - | - | - | - |
| Calcium Carbonate | - | 25% | - | - | - |
| QC200^{a} | - | - | 25% | - | - |
| SC200^{b} | - | - | - | 25% | - |
| TC750^{C} | - | - | - | - | 25% |
| Total: | 100% | 100% | 100% | 100% | 100% |

| | | | | | |
|---|---|---|---|---|---|
| (*) not according to the claims | | | | | |

a -QC200 is cellulose fiber derived from bamboo having a loose density metric of >55 gll, an average fiber length of 145 microns, and a particle size distribution between 32 microns to 200 microns b -SC200 is a cellulose fiber having a loose density metric of >40 gll, an average fiber length of 155 microns, and a particle size distribution between 32 microns and 200 microns. c -TC750 is an alpha cellulose fiber having a loose density metric of >30 gll, an average fiber length of 550 microns, and a particle size distribution between 32 microns and 800 microns.

### Example 2: Density of Chewing Gum Base including cellulose fibers after soaking in water

The compositions (A-E) of Example 1 were measured for initial density levels. Then, the samples were placed in water for a period of 1 hour, at which point density measurements were taken. The samples were then placed back in the water for an additional 17 days and density measurements were again taken. The results are summarized in Table 2 below.

**Table 2: Density of Samples Initially, After 1 Hour, and After 17 Days**

| | A (control) | B (control) | C | D | E |
|---|---|---|---|---|---|
| Initial gum base density [0 hr] (g/cc) | 1.011 | 1.035 | 0.922 | 0.943 | 0.930 |
| Hydrated gum base density after 1 hour (g/cc) | 1.025 | 1.026 | 0.944 | 0.952 | 0.923 |
| Hydrated gum base density after 17 days (g/cc) | 1.047 | 1.069 | 1.024 | 1.028 | 1.004 |
| Overall density change after 17 days (g/cc) | 3.56% | 3.29% | 11.06% | 9.01% | 7.96% |

It was noted that, prior to submerging in water and allowed to hydrate, samples C-E were found to float on oil (mineral oil).

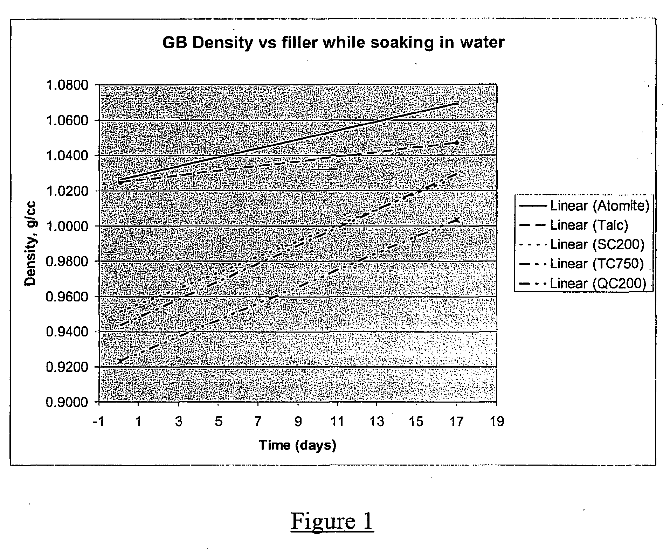

The results of the density measurements are graphically depicted in Figure 1. As can be seen in Figure 1, the three inventive samples (C-E) initially had a density that was significantly lower than the initial density of the control samples (A-B). This demonstrates that products made from the inventive gum bases will have a lower density than traditional chewing gums. On average, the inventive chewing gum bases had an initial density that was about 6% to about 11% lower than traditional chewing gum bases (i.e., chewing gum bases including traditional fillers such as talc and carbonate).

In addition, over time (17 days), the inventive samples were found to take on more water than the control samples. As can be seen, the control chewing gum bases A-B only experienced a *3.56%* and 3.29% increase in density after 17 days. The inventive chewing gum bases C-E experienced increases of 7.96%, 9.01 % and 11.06% after 17 days, respectively.

This data suggests that while all gum bases were capable of picking up water over the course of time, the inventive chewing gum bases experience the most effective water uptake. All three inventive samples, which each replaced traditional fillers such as talc and carbonate with inventive natural fillers including cellulose fibers, experienced significantly higher levels of water uptake over 17 days than did traditional gum bases.

### Example 3: Chewing Gum Base including cellulose fibers

Six more chewing gum bases were prepared according to the methods outlined in Example 1. The control chewing gum base (composition F) included carbonate as the filler. One inventive composition (J) included mastic resin as a natural resin component, in addition to the non-natural glycerol ester component. The compositions of these chewing gum bases (F-K) are set forth in Table 3 below.

**Table 3 - Chewing Gum Bases Including Cellulose Fibers**

| | F (control) (g) | G (g) (*) | H (9) (*) | I (g) (*) | J (g) | K (g) (*) |
|---|---|---|---|---|---|---|
| Elastomer(s) e | 430 | 430 | 430 | 430 | 430 | 430 |
| Microcrystalline wax | 100 | 100 | 100 | 100 | 100 | 100 |
| Glycerol Triacetate | 15 | 17 | 19 | 15 | 15.6 | 15.6 |
| Mastic resin | - | - | - | - | 50 | - |
| Glycerol ester of Pine Rosin | 50 | 50 | 50 | 50 | 5 | 50 |
| QC200^{a} | - | 305 | - | - | 305 | - |
| SC200^{b} | - | - | - | - | - | 305 |
| TC75O^{C} | - | - | 305 | - | - | - |
| Cellulose/Psilliurn (90/10)^{d} | - | - | - | 305 | - | - |
| Calcium Carbonate | 305 | - | - | - | - | - |
| Hydrogenated Vegetable Oil | 50 | 50 | 50 | 50 | 50 | 50 |
| BHT | 1 | 1 | 1 | 1 | 1 | 1 |
| Glycerol Monostearate | 49 | 50 | 50 | 50 | 50 | 50 |
| Total | 1000 | 1003 | 1005 | 1001 | 1006.6 | 1006.6 |

| | | | | | | |
|---|---|---|---|---|---|---|
| a -QC200 is cellulose fiber derived from bamboo having a loose density metric of >55 g/l, an average fiber length of 145 microns, and a particle size distribution between 32 microns-to200 microns b -SC200 is a cellulose fiber having a loose density metric of >40 gll, an average fiber length of 155 microns, and a particle size distribution between 32 microns and 200 microns. c -TC750 is an alpha cellulose fiber having a loose density metric of >30 gll, an average fiber length of 550 microns, and a particle size distribution between 32 microns and 800 microns. d -cellulose/psillium 90110, commercially available as CreaSplend (from CreaFill Fibers Corp.) e-Elastomer is a mixture of 30 grams butyl rubber, 200 grams polyvinyl acetate and 200 grams polyisobutylene (*) not according to the claims | | | | | | |

Initial density measurements of the chewing gum bases (F-K) were taken. The density measurements are set forth in Table 4 below.

**Table 4 - density measurements of chewing gum bases**

| | F (control) | G | H | I | J | K |
|---|---|---|---|---|---|---|
| Density (g/cc) | 1.256 1 | 1.0131 | 1.0369 | 1.01 83 | 1.0285 | 1.0366 |
| % of control density | 100% | 80.7% | 82.5% | 81.0% | 81.9% | 82.5% |

As can be seen, each of the inventive chewing gum bases each had a density that is significantly lower than the control chewing gum base. The inventive chewing gum bases had a density that was between 80.7% and 82.5% of the control chewing gum base. In addition, the chewing gum base which included a natural filler component in addition to a natural softener also provided a chewing gum base that had a density far below the control chewing gum base (inventive composition J).

This data demonstrates the fact that inventive chewing gum bases made from natural fillers provide a density that is significantly below that of a counterpart natural chewing gum base made from non-natural fillers. The inventive compositions may provide a chewing gum base that has a density between about 80% to about 83% of traditional chewing gum bases made from non-natural fillers such as carbonate and/or talc.

### Example 4: Chewing Gums made from chewing gum bases including cellulose fibers

The density of chewing gums made from natural chewing gum bases was then tested. The chewing gum bases of Example 3 were formulated into a chewing gum. The chewing gums were made using traditional methods and components known to one of ordinary skill in the art. The chewing gums were measured for density. The density results of the chewing gums are set forth in Table 5 below.

**Table 5 -density measurements of chewing gums**

| | F (control) (g) | G (g) | H (g) | I (g) | J (8) | K (g) |
|---|---|---|---|---|---|---|
| Density 1.2358 (g/cc) | 1.2777 | 1.2461 | 1.2320 | 1.2344 | 1.2321 | 1.2358 |

Similar to the chewing gum bases set forth in Example 3, the chewing gums made from these bases have a density that is lower than that of the control chewing gum composition. Although the difference in density of the inventive chewing gum composition and control chewing gum composition was not as significantly lower than the difference in the density of the inventive chewing gum base and control chewing gum base, this Example still demonstrates that chewing gums made from the inventive chewing gum bases provide a lower density product than traditional chewing gums. Different formulations of chewing gums made from inventive products may provide an even lower density product. Again, a lower density may provide a more efficient and cost-effective means for preparing commercial chewing gum products.

### Example 5: Densities of chewing gums made from chewing gum bases including cellulose fibers after chewing for thirty minutes

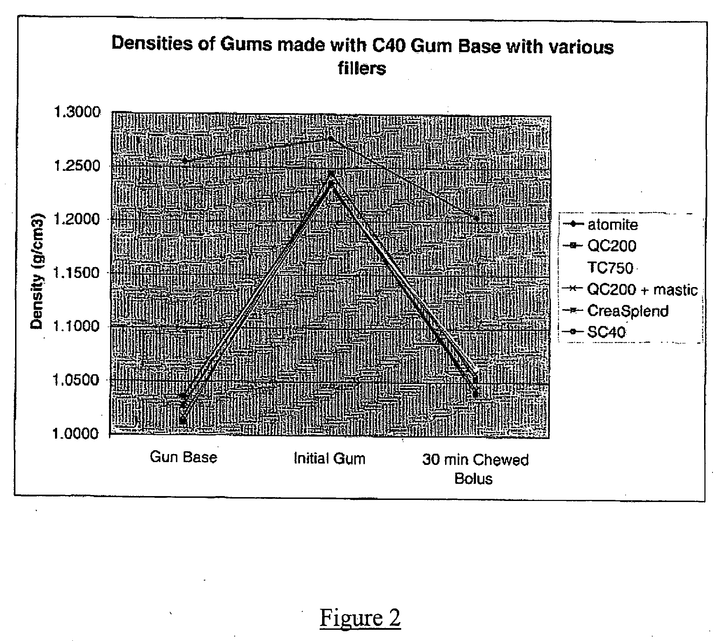

The chewing gums of Example 4 were chewed by individuals in a laboratory setting for a period of thirty minutes, to determine the density after chewing. Density measurements were taken of (1) the gum base, (2) the chewing gum composition prior to chewing, and (3) the chewing gum after chewing for thirty minutes. The results are set forth in Figure 2.

As can be seen, prior to formation of the chewing gum composition, the chewing gum bases including natural components described herein had a density of approximately 1 .OO to 1.05 glcm3. The control chewing gum base (including carbonate fillers) had an initial density of about 1.25 glcm3.

After formation into a chewing gum (i.e., combining the chewing gum base with traditional chewing gum components), the densities of all six gums were higher. The inventive chewing gums had densities of slightly less than 1.25 gIcm3, while the control chewing gum had a density of about 1.275 g/cm3.

However, after chewing the chewing gum compositions for thirty minutes, the density measurement demonstrated highly surprising and unexpected results. It was expected that the chewing gum composition would lose some of its density, due to the removal of certain components in the mouth during chewing, but the results obtained demonstrated a significant difference between control chewing gum composition and the inventive chewing gum compositions. The control chewing gum composition had a density after chewing for thirty minutes of about 1.20 g/cm3. However, each of the inventive, natural chewing gum compositions had densities after chewing of about 1.05 g/cm3. The reduction in density after thirty minutes of chewing demonstrates the ability of the inventive chewing gum compositions to release more of the chewing gum components during chewing than in a control chewing gum composition.

### Example 6: Densities of chewing gums made from chewing gum bases including cellulose fibers after chewing

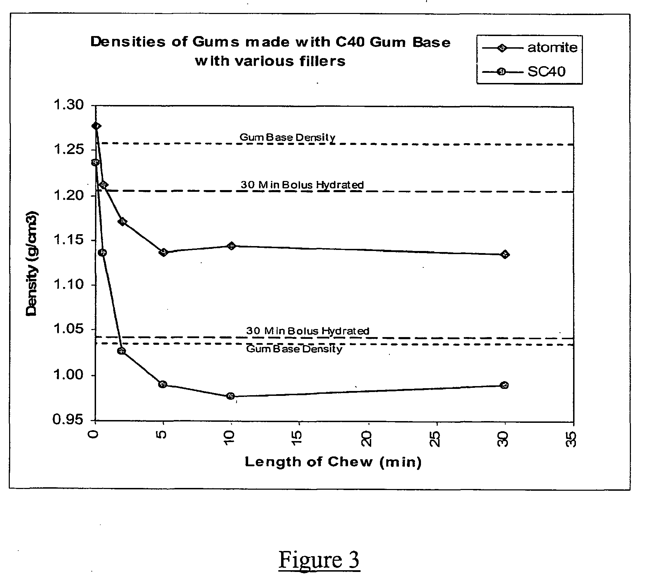

Chewing gums including atomite (control) and chewing gums including SC40 cellulose fibers (inventive) were prepared and were chewed by individuals in a laboratory setting for various time intervals. The chewing gums were chewed for: 0 seconds, 30 seconds, 2 minutes, 5 minutes, 10 minutes, and 30 minutes. After chewing, the chewing gum boluses were collected and analyzed. Densities were measured for each bolus collected. The results are set forth in Table 6 below and depicted in Figure 3.

**Table 6-density after chewing samples**

| | Density after 0 seconds | Density after 30 seconds | Density after 2 minutes | Density after 5 minutes | Density after 10 minutes | Density after 30 minutes |
|---|---|---|---|---|---|---|
| Control | 1.275 | 1.215 | 1.17 | 1.14 | 1.15 | 1.14 |
| Inventive | 1.24 | 1.14 | 1.03 | 0.98 | 0.975 | 0.98 |

The densities of both the control and the experimental gum decreased on similar time scales, leveling off at around 5 minutes. However, as can be seen, the decrease of the measured density of the inventive sample was more dramatic (See Table 7 below):

**Table 7 -percentage decrease in density after chewing**

| | % decrease after 30 seconds | % decrease after 5 minutes | % decrease after 30 minutes |
|---|---|---|---|
| Control | 5.1 | 11.0 | 11.1 |
| Inventive | 8.1 | 19.9 | 19.9 |

### Example 6: Chew Panel Study of Chewing Gums Including Cellulose Fibers

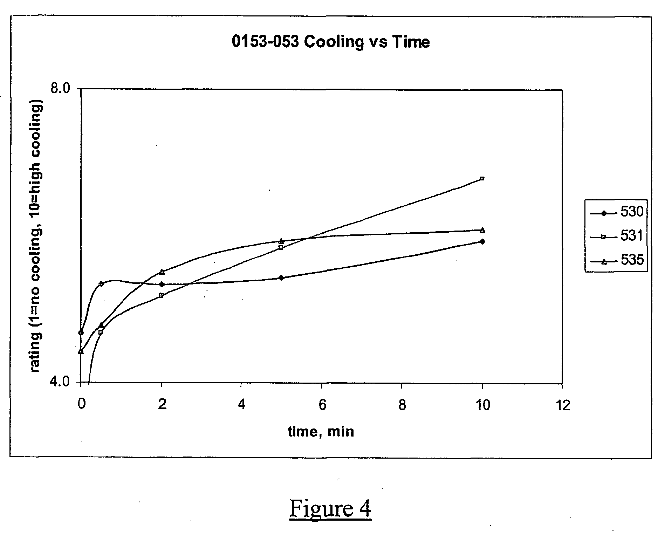

A team of six panelists was assembled to chew and evaluate several experimental gums that incorporated cellulose as a filler in a gum base. Chewing gums including atomite as a filler (530), chewing gums including QC200 (cellulose fiber) (53 1) as a filler, and chewing gums including SC40 (cellulose fiber) (535) as a filler were prepared and stored for a period of approximately three months. Samples were chewed for ten minutes, and the attributes focused on were texture, flavor, sweetness, cooling, and bolus size. Ratings were obtained for each attribute at time intervals of 0 minutes, 0.5 minutes, 2 minutes, 5 minutes, and 10 minutes. The results of the study are shown in Figures 4-8.

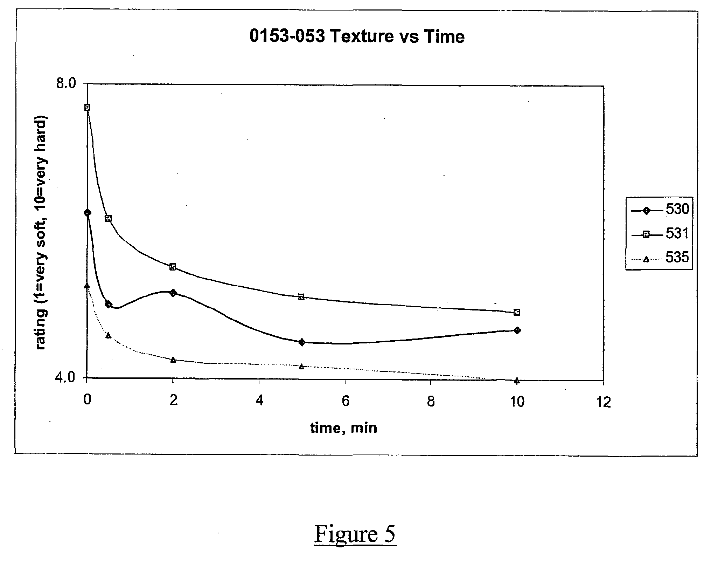

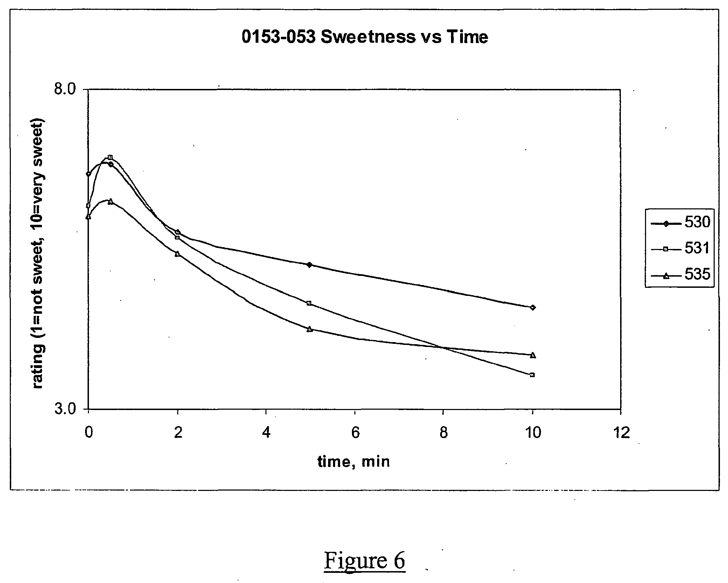

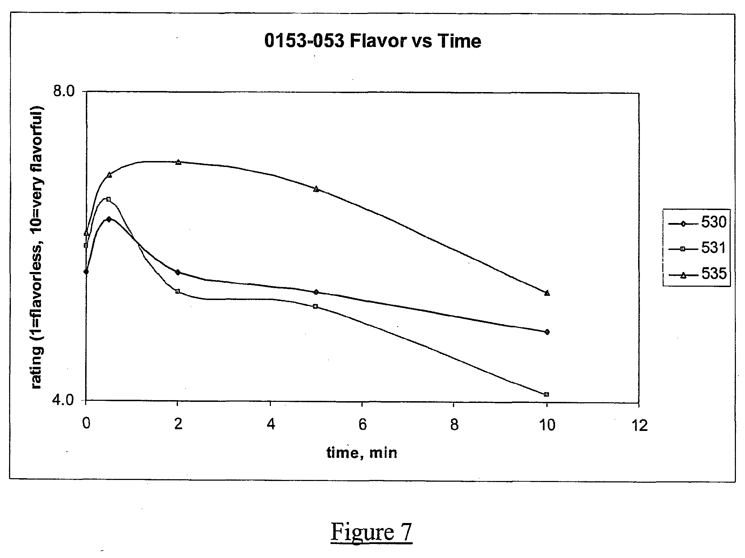

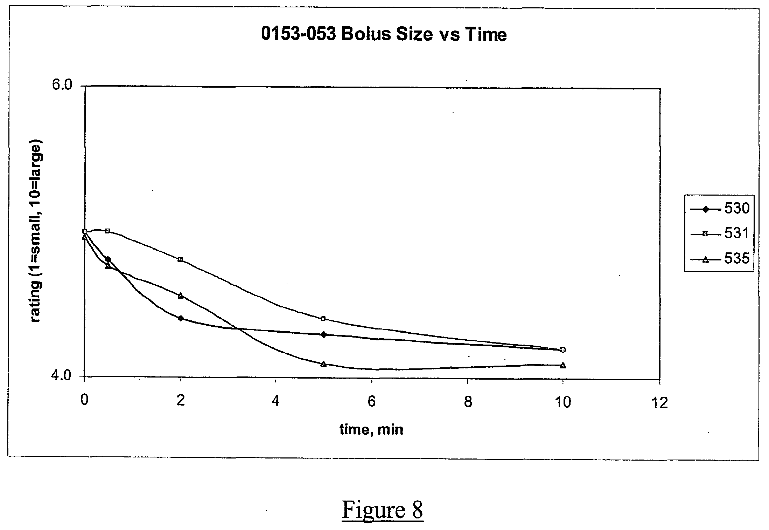

As can be seen in Figure 4, the cooling sensation of the chewing gum can be seen to be steadily increasing for the sample including QC200, and at 10 minutes the cooling sensation was still on the rise. After 10 minutes, the cooling sensation of the chewing gum including atomite was the lowest of the three samples. The textures were fairly similar across the samples (Figure 5), with the sample including SC40 showing up as the softest throughout the entire chew time. Sweetness of the chewing gums was measured and is depicted in Figure 6. As can be seen, the three chewing gums had similar sweetness delivery at initial chew and at 30 seconds, however both of the inventive chewing gums had a lower sweetness perception than that of the control from the three minute point onward. The flavor perception, however, of the sample including SC40 was significantly stronger than the other two samples tested (Figure 7). This flavor perception was evident during the entire chew period. Finally, the bolus size was tested and was found to be fairly similar across the samples during the period of data collection (See Figure 8).

The panelists were asked to record which sample they had the highest overall liking for at the conclusion of the team chew panel. Four out of the six participants noted that they liked the sample including SC40 the best overall, which suggests that the softer texture, combined with the greater flavor intensity, were pleasing properties provided by the SC40 cellulosic filler.

### Example 7: WICS Wet Indoor Concrete Slab) Test

A concrete slab was obtained and submerged in water for several days to washlneutralize the surface. During this washing phase, the pH of the water was monitored to check for near neutrality (-pH 7). Once several days elapsed the pH of the surface of the slab was found to be neutral. The water was drained and refilled with fresh tap water, up to the top surface of the slab.

Gum samples including control fillers (atomite) and gum samples including various inventive fillers (including various types of cellulosic fibers) were chewed by volunteers for 30 minutes prior to starting the test. The boluses were collected and placed on the surface of the concrete slab using manuaVhand pressure. The boluses were left to sit on the wet slab for one week, each day adding water so that the level stayed at the height of the top surface of the slab. Any changes during this time were noted, and at the end of the one week period the samples were removed using a spatula and checked for adhesion to the slab, then the density of each sample was measured and the boluses discarded.

During the setup for this test it was noted that besides not adhering very well to the wet concrete slab, the cellulosic boluses also had a tendency to float on the water. Non-adhering samples were removed from the experiment and replaced with samples that were properly adhered to the concrete slab.

After the initial adhesion to the slab, each of the samples was noted to have even color and consistency. However, after day three, there was a noticeable color difference in the samples. The control sample was still noted to have even color and consistency. However, the inventive samples were each found to have a noticeable dye migration, where the outside of the samples was whiter (less dye) and the central region of the samples had more color. These results demonstrate that the inventive chewing gum samples had the ability to take on water (an increased water uptake) over time, even after chewing. This increased bolus hydration may demonstrate increased compostability andlor biodegradability in the inventive chewing gums, especially as compared to control chewing gums.

### Example 8: Hydrated Gum Slab Test

Ten gum slab samples of four batches were prepared and were placed in amber screw- capped jars filled 80% with tap water from Whippany, NJ. The four batches included a control batch (using atomite as the filler), and three inventive batches(QC200; QC200 with mastic resin; and CreaSplend). The caps were replaced and the samples allowed to soak for three days. After the three days, the inventive samples were found to float on water, while the control sample did not float on water.

Initially the samples all sank to the bottom of the jars, but as the water soluble materials leached out over three days, the experimental cellulosic slabs became less dense than water and began to float. The sample including CreaSplend (90%/10% QC200/psillium) exhibited some unique behavior, in that it was slightly denser than the other inventive samples. This sample was found to still float on water, but not as easily as the two other inventive batches. In addition, slabs from this jar alone were found to have a slimy coating on them.

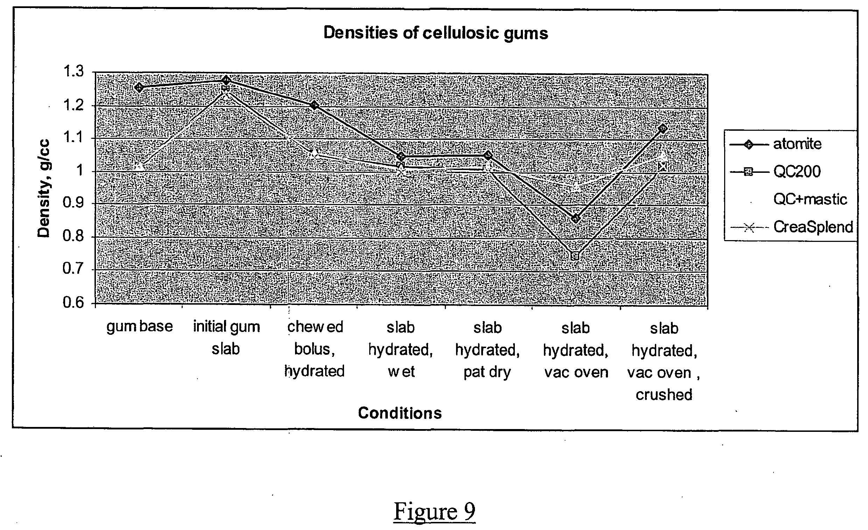

After soaking for three days, some samples were removed from each jar and tested for density in several ways: (1) removal and direct wet density measurement (briefly patted dry with napkin), (2) allowing samples to sit and dry on a napkin for several minutes before measuring, (3) vacuum drying samples in the vacuum oven overnight using full house vacuum but no added heat, and finally (4) taking vacuum oven dried samples and crushing them first to remove air bubbles created by the vacuum. The densities of the samples, along with initial slab, gum base, and chewed bolus, can be seen in Figure 9. It was noted that the experimental gums were quite close in all cases except vacuum oven dried before crushing. The control gum was found to nearly always be more dense than experimental gums.

## Claims

1. A chewing gum base comprising:
(a) an elastomer;
(b) a natural softener chosen from plant sterols, plant sterol esters, lanolin, cholesterol NF, damar resin, copal resin, sandarac resin, mastic resin, mastic powder, ursolic acid, lycopene and squalene; and
(c) a filler comprising at least one natural component, wherein said natural component comprises at least one cellulose fiber.

2. The chewing gum base of claim 1, wherein said filler comprises a combination of a natural component and a non-natural component.

3. The chewing gum base of claim 2, wherein said natural component comprises at least one cellulose fiber and said non-natural component is selected from the group consisting of talc and carbonate.

4. The chewing gum base of claim 1, wherein said natural component comprises at least one cellulose fiber and psyllium.

5. A chewing gum composition comprising the chewing gum base of claim 1.

6. A method of making a chewing gum base, comprising the steps of:
(a) providing an elastomer;
(b) providing a natural softener chosen from plant sterols, plant sterol esters, lanolin, cholesterol NF, damar resin, copal resin, sandarac resin, mastic resin, mastic powder, ursolic acid, lycopene and squalene;
(c) providing a filler comprising at least one natural component, wherein said natural component comprises at least one cellulose fiber; and
(d) mixing said elastomer, natural softener, and filler to provide a chewing gum base.

7. The method of claim 6, wherein said filler comprises a combination of a natural component and a non-natural component.

8. The method of claim 7, wherein said natural component comprises at least one cellulose fiber and said non-natural component is selected from the group consisting of talc and carbonate.

9. The method of claim 6, wherein said natural component comprises at least one cellulose fiber and psyllium.

10. The method of claim 6, further comprising the step of (e) making a chewing gum composition from said chewing gum base.

## Patentansprüche

1. Kaugummibasis umfassend:
(a) ein Elastomer;
(b) einen natürlichen Weichmacher ausgewählt aus Pflanzensterinen, Estern von Pflanzensterinen, Lanolin, Cholesterin NF, Damarharz, Copalharz, Sandarakharz, Mastixharz, Mastixpulver, Ursolsäure, Lycopen und Squalen; und
(c) einen Füllstoff, der zumindest eine natürliche Komponente umfasst, wobei die natürliche Komponente zumindest eine Zellulosefaser umfasst.

2. Kaugummibasis nach Anspruch 1, wobei der Füllstoff eine Kombination einer natürlichen Komponente und einer nicht natürlichen Komponente umfasst.

3. Kaugummibasis nach Anspruch 2, wobei die natürliche Komponente zumindest eine Zellulosefaser umfasst, und die nicht natürliche Komponente ausgewählt ist aus der Gruppe bestehend aus Talk und Carbonat.

4. Kaugummibasis nach Anspruch 1, wobei die natürliche Komponente zumindest eine Zellulosefaser und Flohsamen umfasst.

5. Kaugummizusammensetzung umfassend die Kaugummibasis nach Anspruch 1.

6. Verfahren zur Herstellung einer Kaugummibasis, umfassend die folgenden Schritte:
(a) Bereitstellen eines Elastomers;
(b) Bereitstellen eines natürlichen Weichmachers ausgewählt aus Pflanzensterinen, Estern von Pflanzensterinen, Lanolin, Cholesterin NF, Damarharz, Copalharz, Sandarakharz, Mastixharz, Mastixpulver, Ursolsäure, Lycopen und Squalen;
(c) Bereitstellen eines Füllstoffs, der zumindest eine natürliche Komponente umfasst, wobei die natürliche Komponente zumindest eine Zellulosefaser umfasst; und
(d) Mischen des Elastomers, des natürlichen Weichmachers und des Füllstoffs, um eine Kaugummibasis bereitzustellen.

7. Verfahren nach Anspruch 6, wobei der Füllstoff eine Kombination einer natürlichen Komponente und einer nicht natürlichen Komponente umfasst.

8. Verfahren nach Anspruch 7, wobei die natürliche Komponente zumindest eine Zellulosefaser umfasst, und die nicht natürliche Komponente ausgewählt ist aus der Gruppe bestehend aus Talk und Carbonat.

9. Verfahren nach Anspruch 6, wobei die natürliche Komponente zumindest eine Zellulosefaser und Flohsamen umfasst.

10. Verfahren nach Anspruch 6, des Weiteren umfassend den Schritt (e), Herstellen einer Kaugummizusammensetzung aus der Kaugummibasis.

## Revendications

1. Base de gomme à mâcher comprenant :
(a) un élastomère ;
(b) un ramollissant naturel choisi parmi les phytostérols, les esters de phytostérol, la lanoline, le cholestérol NF, la résine Damar, la résine de type copal, la sandaraque, la résine mastic, la poudre de mastic, l'acide ursolique, le lycopène et le squalène ; et
(c) un agent de remplissage comprenant au moins un composant naturel, ledit composant naturel comprenant au moins une fibre cellulosique.

2. Base de gomme à mâcher selon la revendication 1, dans laquelle ledit agent de remplissage comprend une combinaison d'un composant naturel et d'un composant non naturel.

3. Base de gomme à mâcher selon la revendication 2, dans laquelle ledit composant naturel comprend au moins une fibre cellulosique et ledit composant non naturel est choisi dans le groupe constitué du talc et du carbonate.

4. Base de gomme à mâcher selon la revendication 1, dans laquelle ledit composant naturel comprend au moins une fibre cellulosique et du psyllium.

5. Composition de gomme à mâcher comprenant la base de gomme à mâcher selon la revendication 1.

6. Procédé de préparation d'une base de gomme à mâcher, comprenant les étapes consistant à :
(a) apporter un élastomère ;
(b) apporter un ramollissant naturel choisi parmi les phytostérols, les esters de phytostérol, la lanoline, le cholestérol NF, la résine Damar, la résine de type copal, la sandaraque, la résine mastic, la poudre de mastic, l'acide ursolique, le lycopène et le squalène ;
(c) apporter un agent de remplissage comprenant au moins un composant naturel, ledit composant naturel comprenant au moins une fibre cellulosique ; et
(d) le mélange desdits élastomère, ramollissant naturel et agent de remplissage de manière à obtenir une base de gomme à mâcher.

7. Procédé selon la revendication 6, dans lequel ledit agent de remplissage comprend une combinaison d'un composant naturel et d'un composant non naturel.

8. Procédé selon la revendication 7, dans lequel ledit composant naturel comprend au moins une fibre cellulosique et ledit composant non naturel est choisi dans le groupe constitué du talc et du carbonate.

9. Procédé selon la revendication 6, dans lequel ledit composant naturel comprend au moins une fibre cellulosique et du psyllium.

10. Procédé selon la revendication 6, comprenant en outre l'étape consistant à (e) préparer une composition de gomme à mâcher à partir de ladite base de gomme à mâcher.
